# FASCICULE DE BREVET EUROPEEN

(11) **EP 3 972 218 B1**
(45) Date de publication et mention de la délivrance du brevet: **01.05.2024**
(21) Numéro de dépôt: 21197113.0
(22) Date de dépôt: 16.09.2021
(51) Int. Cl.: H04L 61/2503, H04L 61/2539, H04L 9/40, H04L 61/4511, H04L 61/5007, H04L 61/503, H04L 61/58, H04L 61/59, H04W 12/02

(54) **PROCÉDÉ D'ACCÈS SÉCURISÉ À DES RESSOURCES VIA UN RÉSEAU DE TÉLÉCOMMUNICATION ET SYSTÈME DE CONTRÔLE ASSOCIÉ**
METHODE FÜR DEN SICHEREN ZUGRIFF AUF RESSOURCEN ÜBER EIN TELEKOMMUNIKATIONSNETZWERK UND ZUGEHÖRIGE KONTROLLSYSTEME
METHOD FOR SECURE ACCESS TO RESOURCES VIA A TELECOMMUNICATION NETWORK AND ASSOCIATED CONTROL SYSTEM

(30) Priorité: 17.09.2020 FR 2009408
(43) Date de publication de la demande: 23.03.2022
(73) Titulaire: THALES, 92400 Courbevoie (FR)
(72) Inventeur: MONTENOT, Jean-Marc, 92622 GENNEVILLIERS CEDEX (FR); SCHOLLER, Franck, 92622 GENNEVILLIERS CEDEX (FR); DELATTRE, Michel, 92622 GENNEVILLIERS CEDEX (FR)
(74) Mandataire: Lavoix

(56) Documents cités:
- WO-A1-2017/050591
- US-A1- 2013 133 057
- US-A1- 2017 374 088

## Description

La présente invention concerne le domaine de l'accès, par des terminaux et via un réseau de télécommunication, à des ressources (serveurs, services, applications ...), notamment des ressources sensibles, que l'on souhaite donc préserver de cyberattaques.

Or, à partir de l'identité réseau d'une ressource connue, avec ou sans l'aide d'un mécanisme de résolution de nom de domaine, tout terminal peut s'adresser à cette ressource, ou lancer des attaques (exemple par déni de service).

On connait des documents US 2013/133057 A1 et US 2017/374088 A1 des procédés d'accès sécurisé.

On connaît également WO 2017/050591 A1 , qui permet de restreindre par authentification et autorisation la divulgation de l'identité réseau d'une ressource à un terminal requérant, mais cette identité réseau peut être communiquée ou capturée au travers différents moyens, par exemple par :
- mécanisme d'écoute entre le service de résolution de nom de domaine (DNS) et un terminal requérant autorisé à accéder à la ressource (« man in the middle »), permettant d'acquérir la connaissance partielle des noeuds réseau traversés ;
- communication par un terminal requérant à un attaquant de l'identité réseau de la ressource.

Il existe ainsi un besoin de sécuriser l'accès à de telles ressources.

A cet effet, suivant un premier aspect, l'invention propose un procédé d'accès sécurisé selon la revendication 1.

L'invention permet ainsi d'améliorer la sécurisation de l'accès aux ressources, notamment sensibles, via une allocation dynamique d'identités réseau virtuelles aux ressources sensibles, ces identités réseau virtuelles étant uniques par terminal.

L'identité réseau réelle de la ressource sensible n'est ainsi jamais communiquée aux terminaux, mais remplacée par une identité réseau virtuelle, qui est temporaire et unique par terminal, et, qui, optionnellement, n'est valide que pendant la durée de la session d'attachement au réseau du terminal requérant. Parmi les terminaux, seuls ceux autorisés à accéder à une ressource sensible donneront lieu à la création d'identités réseau virtuelles de ressources sensibles.

Seul le terminal requérant aura accès au service via cette identité réseau virtuelle du service, et sera autorisé à utiliser cette identité réseau virtuelle (l'identité réseau virtuelle est unique par requérant).

Dans des modes de réalisation, le procédé d'accès sécurisé est selon l'une quelconque des revendications 2 à 5.

Suivant un deuxième aspect, la présente invention propose un système de contrôle d'accès sécurisé selon la revendication 6.

Dans des modes de réalisation, le système de contrôle d'accès est selon l'une quelconque des revendications 7 à 10.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue schématique d'une plate-forme de télécommunication dans un mode de réalisation de l'invention ;
[Fig 2] la figure 2 est un organigramme d'étapes mises en oeuvre dans un mode de réalisation de l'invention ;

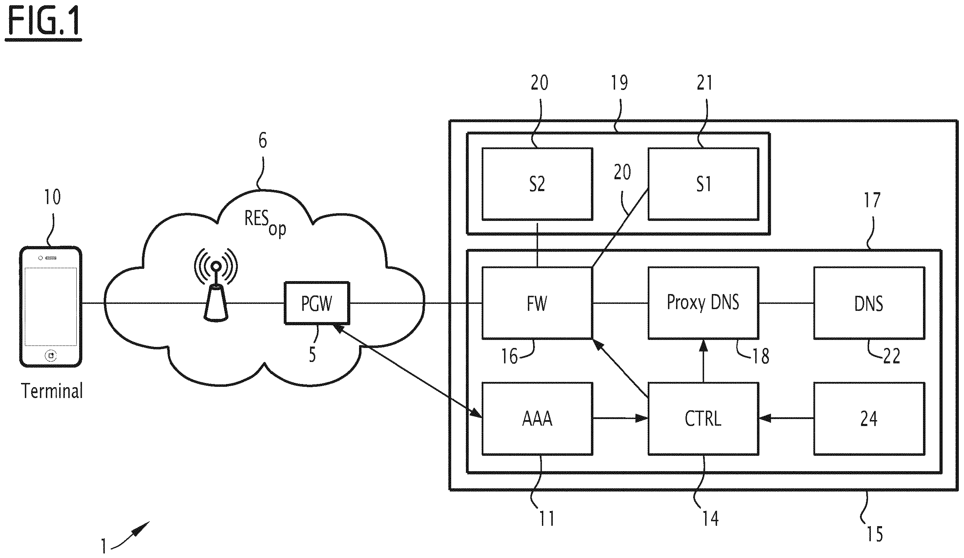

La figure 1 représente schématiquement une plate-forme 1 de télécommunication dans un mode de réalisation de l'invention, par exemple de type 4G ou 5G.

La plate-forme 1 de télécommunication comprend des dispositifs client 10, appelés encore terminaux 10, un réseau de télécommunication 6 RESop et un ensemble 15 d'équipements.

Un seul terminal 10 est représenté en figure 1.

L'ensemble 15 d'équipements comporte un ensemble 19 de ressources (ces ressources comportant des serveurs informatiques et/ou services fournis à partir de serveurs, tels qu'applications ...) et un système électronique de contrôle d'accès 17.

L'ensemble 19 de ressources comprend deux sous-ensembles S1, S2 entre lesquels les ressources de l'ensemble 19 sont réparties : le sous-ensemble S1 comporte les ressources considérées comme sensibles, nommées RES_sens, et auxquelles on souhaite particulièrement sécuriser l'accès et le sous-ensemble S2 comporte les autres ressources, moins sensibles, nommées RES_nnsens.

Le réseau de télécommunication 6 se décompose en 2 segments, un segment d'accès aux terminaux 10 et un segment de transit permettant d'atteindre des équipements 15. A la frontière entre les 2 segments, des fonctions de passerelle sont déployées pour gérer la mobilité des terminaux 10 et leur authentification. Par exemple, en 4G, un module PGW 5 sera inséré sur le chemin des données entre terminaux 10 et équipements 16

Le système de contrôle d'accès 15 comporte un équipement réseau de sécurité 16, par exemple de type FireWall, nommé équipement FW 16, un Proxy DNS 18, un DNS 22 (en anglais « Domain Name System »), un module d'autorisation et d'authentification 11, dit module AAA 11, un bloc de contrôle 14, et un bloc réseau cyber défense de type NMCD (en anglais « Network Management Cyber Defense ») 24, nommé ci-après bloc NMCD 24 et par exemple conforme au standard FMN Spirale 6.

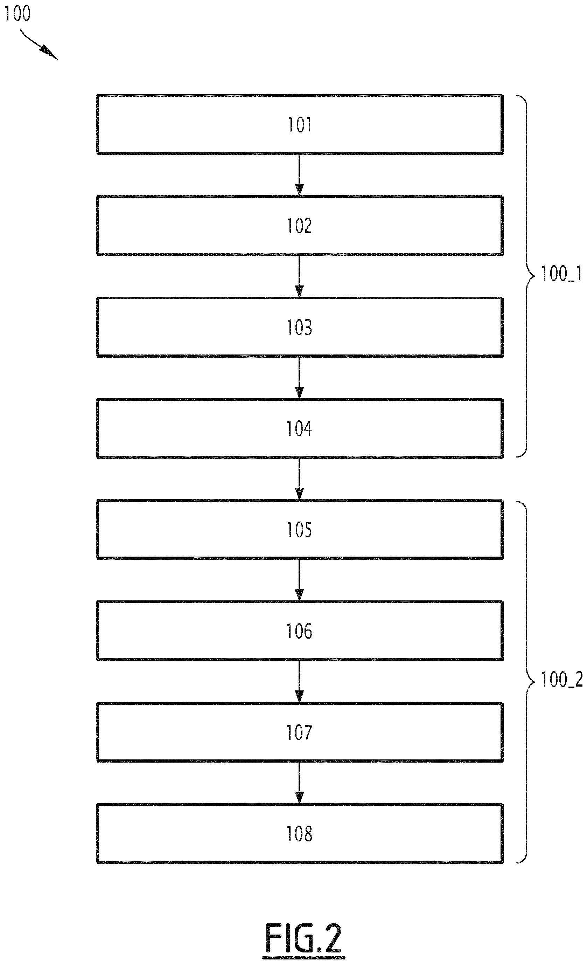

Le système de contrôle d'accès 17 est adapté pour contrôler l'accès des terminaux 10 aux ressources, de la manière décrite plus loin en référence à la figure 2.

Le bloc de contrôle 14 comporte une mémoire dans laquelle est stockée une liste L1, indiquant pour chaque identité réseau réelle de terminal 10 et/ou identité d'utilisateur courant (numéro client tel que numéro d'abonné, IMSI en 3GPP...), les autorisations d'accès préalablement fixées vers les ressources sensibles du sous-ensemble S1 identifiées, dans la liste L1, par leur identité réseau réelle et leur nom de domaine.

Le Proxy DNS 18 et le DNS 22 sont adaptés pour effectuer la résolution des noms de domaine de la manière décrite plus bas.

Le module AAA 11 est adapté pour mettre en oeuvre un mécanisme permettant l'authentification et l'autorisation d'accès à la ressource réseau pour un terminal 10 ainsi que son identité réseau sur le réseau, i.e. son adresse IP (en anglais « internet Protocol », cf norme RFC 791) par exemple, par exemple de type AAA (en anglais « authentication, authorization, accounting ») typiquement sur interface SGI (radius/diameter).

Les terminaux 10, le système de contrôle d'accès 17 (voire les différents composants du système 15 entre eux dans les modes de réalisation où ils ne disposent pas entre eux de liaisons spécifiques) et les ressources de l'ensemble 19 sont reliés par le réseau 6 adapté pour mettre en oeuvre des télécommunications.

En figure 2, un ensemble 100 d'étapes mises en oeuvre, dans un mode de réalisation de l'invention, dans la plate-forme de télécommunication 1 est représenté.

Il comprend une phase 100_1 (étapes 101 à 104), préalable à l'accès aux ressources sensibles, puis une phase 100_2 d'accès aux ressources sensibles (étapes 105 à 108).

Dans une étape 101, lors de l'ouverture d'une session de télécommunication d'attachement au réseau 6 par le terminal 10 via le réseau 6, le terminal 10 met en oeuvre avec le module AAA 11 une procédure d'authentification et d'autorisation du terminal 10 au cours de laquelle le module AAA 11 recueille l'identité réelle sur le réseau 6 du terminal 10. Typiquement, l'identité réelle du terminal 10 comporte son adresse IP.

Seulement après authentification réussie du terminal 10 par le module AAA 11, ce dernier fournit au bloc de contrôle 14 la confirmation d'authentification indiquant l'identité réseau réelle du terminal 10 (comprenant typiquement son adresse IP réelle) et en option l'identité de l'utilisateur du terminal 10 qu'il a également recueillie pendant les échanges avec le terminal 10.

Dans une étape 102, suite à la réception de cette confirmation d'authentification, le bloc de contrôle 14, génère une identité réseau virtuelle unique (typiquement une adresse IP virtuelle) pour chaque ressource de l'ensemble S1 et autorisée, dans la liste L1, pour le terminal 10 et/ou son utilisateur, en fonction de l'identité réseau réelle du terminal 10 et/ou de l'identité de l'utilisateur courant indiquée dans la confirmation d'authentification. Puis il complète la liste L1 en indiquant en correspondance, avec les identités réelles des ressources sensibles, leur identité virtuelle associée à l'identité réelle du terminal 10 (et optionnellement à l'identité utilisateur) pour lequel elles ont été créées.

Ainsi, des identités réseau virtuelles créées pour des terminaux 10 distincts (et/ou des utilisateurs distincts d'un même terminal 10) et identifiant le même port d'une même ressource sensible et utilisées pour des accès respectifs au même moment, seront différentes.

Les adresses IP réelles des ressources sensibles S1 ne sont pas accessibles via le réseau de télécommunication 6 (par des règles de blocage dans le FW 16, et/ou parce que le sous réseau des ressources sensibles ne sont pas dans les règles de routage du réseau de télécommunication 6).

Dans une étape 103, le bloc de contrôle 14 extrait de la liste L1 ainsi actualisée la liste L2 des identités réseaux virtuelle nouvellement créées pour des ressources sensibles, associées chacune, dans L2, aux identités réseaux réelles de ces ressources de l'ensemble S1 et à l'identité réseau du terminal 10 (et/ou optionnellement à l'identité utilisateur) pour lequel elles ont été créées, et fournit la liste L2 à l'équipement FW 16,

En parallèle, le bloc de contrôle 14 extrait de la liste L1 ainsi actualisée la liste L3 indiquant les identités réseau virtuelle nouvellement créées pour des ressources sensibles associées chacune, dans L3, à leur nom de domaine, l'identité réseau du terminal 10 (et optionnellement l'identité utilisateur) pour lequel elles ont été créées ; et le bloc de contrôle 14 délivre la liste L3 au proxy DNS 18.

Dans une étape 104, l'équipement FW 16, suite à la réception de la liste L2, commande la mise en place, entre le réseau de télécommunication 6 et le réseau d'accès aux services 19, de règles de remplacement (« nattage ») entre les identités réseau virtuelle des ressources sensibles listées dans L2 et leur identité réseau réelle. Ces règles de remplacement sont exclusives au terminal 10 identifié sur le réseau 6 par son identité réseau et seront appliquées par la suite par les modules NAT dans le réseau 6 à chaque flux réseau échangé entre le terminal 10 et une ressource du sous-ensemble S1 auquel le terminal 10 (optionnellement son utilisateur) aura accès (cf. les étapes 105-108) ; c'est, dans le cas considéré, l'équipement de sécurité FW 16 qui réalise le nattage dynamique et donc le remplacement des adresses IP : les flux provenant du réseau 6 comportent l'adresse du terminal 10 et l'adresse IP virtuelle (pour le cas des ressources sensibles) ; le FW 16 remplace les adresse IP virtuelles par leur adresse réelle lorsqu'il transmet le flux vers les ressources sensibles ou inversement il change l'adresse IP réelle par l'adresse virtuelle lorsqu'il transmet le flux vers le terminal 10.

L'application de ces règles a pour effet, relativement à une ressource de la liste L2 et pour le terminal 10 :
- pour tout flux provenant de la ressource de la liste L2 et à délivrer au terminal 10 par le réseau 6 : remplacement, dans ce flux, de l'identité réseau réelle de la ressource par l'identité réseau virtuelle de la ressource correspondant, dans L2, à ladite identité réseau réelle de la ressource pour l'identité réseau dudit terminal (et/ou optionnellement l'identité utilisateur) ;
- pour tout flux en provenance dudit terminal 10 et indiquant, outre l'identité réseau dudit terminal, l'identité réseau virtuelle de la ressource comme identité de destination du flux : l'acheminement, par le réseau 6, à destination de l'identité réseau réelle de la ressource associée, dans L2, à l'identité réseau virtuelle de la ressource et à l'identité réseau dudit terminal (et/ou optionnellement l'identité utilisateur) (ces identité réseau virtuelle de la ressource et identité réseau dudit terminal (et/ou optionnellement l'identité utilisateur) considérées sont celles indiquées dans le flux).

Le proxy DNS 18, suite à la réception de la liste L3, crée, et mémorise, un cache spécifique pour les résolutions de noms des ressources du sous-ensemble S1 de la liste L3. Ce cache spécifique est associé au terminal 10 identifié par son identité réseau et est renseigné avec la correspondance des noms de domaines des ressources et les identités réseaux virtuelles de la liste L3.

Ensuite, ces étapes préparatoires étant réalisées, dans une étape 105, le proxy DNS 18 reçoit une requête de résolution de nom de domaine provenant du terminal 10, au travers du réseau 6, lorsque ce dernier requiert l'accès par le réseau 6 à une ressource de l'ensemble de ressources 19. Ladite requête inclut le nom de domaine de la ressource auquel le terminal 10 souhaite accéder. Ladite requête inclut en outre des informations relatives à l'identité réseau du client (et/ou optionnellement de l'utilisateur).

Dans une étape 106, tout d'abord, le proxy DNS 18 recherche si un cache spécifique associé à l'identité réseau du terminal 10 existe.
--> Si le cache pour ce terminal 10 n'existe pas, ou si le nom de domaine n'est pas trouvé dans le cache mémorisé pour ce terminal 10 :
   la requête de résolution de nom de domaine est transmise au DNS 22 dans le cas où la ressource n'est pas une ressource sensible RES_sens du sous-ensemble S1 d'après la liste L3 ;
   - dans le cas où la ressource est une ressource sensible RES_sens une réponse négative est faite à la requête du terminal par le proxy DNS 18.
      -->--> La réponse du DNS 22 au proxy DNS 18 à une requête transmise par le proxy DNS 18 comporte, quand le nom de domaine est celui d'une ressource RES_nnsens du sous-ensemble S2, l'identité réseau réelle de la ressource associée au nom de domaine qui était inclus dans la requête. Une fois l'identité réseau réelle de cette ressource RES_nnsens obtenue par le terminal, des échanges sont mis en oeuvre entre le terminal 10 et la ressource RES_nnsens : les flux provenant de la ressource RES_nnsens et délivrés au terminal 10 par le réseau 6 contiennent alors en tant qu'identité source l'identité réseau réelle de la ressource RES_nnsens ; les flux émis par le terminal 10 à destination de la ressource RES_nnsens comportent outre l'identité réseau dudit terminal, l'identité réseau réelle de cette ressource dans le champ de destination.
   La réponse du DNS 22 reçue en retour par le proxy DNS18 est transmise au terminal 10.
--> Si le nom de domaine est trouvé dans le cache spécifique associé au terminal 10, une réponse à la requête de résolution de nom de domaine est préparée par le proxy DNS 18, puis transmise par le proxy DNS 18 au terminal 10, contenant l'identité virtuelle associée, dans le cache, au nom de domaine qui était à résoudre.

Dans une étape 107, une fois cette réponse reçue, le terminal 10 utilise l'identité réseau virtuelle obtenue pour échanger de l'information avec la ressource RES_sens au travers du réseau, comportant des flux de communication émis et reçus.

Dans une étape 108, l'équipement FW 16 traite chaque flux réseau provenant du terminal 10 et à destination de la ressource RES_sens en remplaçant l'identité virtuelle dans la destination des entêtes du flux réseau par l'identité réelle contenu dans les règles de remplacement associées au terminal 10.

Inversement, les flux réseaux provenant de de la ressource RES_sens à destination du terminal 10 sont traités par l'équipement FW 16 pour remplacer l'identité réelle dans les entêtes de source de flux réseau par l'identité virtuelle de la ressource RES_sens contenue dans les règles de remplacement associées au terminal 10.

En outre, dans un mode de réalisation :
- l'équipement FW 16 vérifie que l'identité réseau virtuelle de ressource utilisé par le terminal 10 est bien celle enregistrée comme correspondant à l'identité réseau dudit terminal selon la liste L2 ; si elles ne correspondent pas, il déclenche un traitement de gestion d'accès suspect ; et/ou

- l'équipement FW 16 vérifie que l'identité réseau virtuelle de ressource utilisée par le terminal est bien celle enregistrée comme correspondant à l'identité réseau dudit terminal et l'identifiant dudit utilisateur courant du terminal ; si elles ne correspondent pas, l'équipement FW 16 déclenche un traitement de gestion d'accès suspect (par exemple, non accès à la ressource et/ou reroutage des flux en provenance du terminal vers un « bac à sable ») ;
- l'équipement FW 16 vérifie qu'une identité réseau virtuelle de ressource n'est pas utilisée par plus d'un terminal ; s'il détecte qu'une identité réseau virtuelle d'une ressource est utilisée par plus d'un terminal, il déclenche un traitement de gestion d'accès suspect.

Dans un mode de réalisation, le bloc NMCD 24 transmet un message d'avertissement au bloc de contrôle 14 signalant une menace en cours impliquant un terminal 10 en cours de session. Suite à ce message, le bloc de contrôle 14 indique à l'équipement FW 16 par un message de commande qu'il lui transmet, de modifier les règles existantes au terminal 10 pour rediriger les flux provenant de ce dernier vers une identité réseau de délestage de type « bac à sable ». Une alternative est de supprimer les règles de remplacement relatives à ce terminal 10.

Dans un mode de réalisation, les adresses virtuelles ne sont valides que pour la durée de la session d'attachement réseau ouverte par le terminal 10 dans le réseau 6 ou pour une durée inférieure pré-déterminée. A l'issue de la période de validité, elles sont supprimées dans le réseau, ainsi que les règles de remplacement associées.

Dans un mode de réalisation, la création d'une adresse IP virtuelle d'une ressource RES_sens pour un terminal 10 s'accompagne de la création d'un chemin spécifique protégé via un dispositif SDN (« controller Software Defined Network ») connecté au bloc 14 CTRL.; l'équipement FW 16 programment alors le réseau 6 pour que les flux entre le terminal 10 et la ressource empruntent ces routes.

Autrement dit, le mode de réalisation précité, la création comprend également la création d'un chemin, propre au terminal 10, destiné à être emprunté par les flux entre le terminal 10 et la ressource. Il est alors clair que, pour une même ressource, ce chemin est distinct d'un terminal 10 respectif à un autre. Ainsi, la sécurité de l'accès à la ressource est renforcée par le fait que le chemin soit propre au terminal.

Dans une alternative, le proxy DNS 18, sur la base d'un cache de noms de domaines autorisés pour le terminal 10 (fourni par un service d'autorisation), génère ou récupère une identité réseau virtuelle pour chaque ressource RES_sens autorisée et insère unitairement la configuration du nattage dynamiquement dans l'équipement FW 16 lors de chaque nouvelle demande de résolution de nom provenant du dispositif client pour un service (et non pas dans une phase préalable).

Dans un mode de réalisation, la solution établit un accès réseau unique entre le terminal 10 et une ressource sensible RES_sens à travers l'équipement FW 16.

Dans un mode de réalisation, l'identité réelle des ressources sensibles RES_sens n'est connue, au sein de la plate-forme 1, que de l'équipement FW 16 et du bloc de contrôle 14.

La distribution des traitements décrite ci-dessus est liée aux composants du système de contrôle d'accès 15. L'architecture de ce dernier peut être autre que celle présentée ci-dessus et la distribution des traitements change alors.

Dans un mode de réalisation, le bloc de contrôle 14, et/ou respectivement un autre composant du système de contrôle d'accès tel l'équipement FW 16, le Proxy DNS 18, le DNS 22, le module AAA 11 ou le bloc NMCD 24, comprend un processeur et une mémoire. La mémoire comprend des instructions logicielles, qui lorsqu'elles sont exécutées sur le processeur, mettent en oeuvre automatiquement les étapes incombant au composant considéré décrites en référence à la figure 2.

Dans un autre mode de réalisation, le composant considéré est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*).

La solution telle que décrite en référence aux figures permet de ne donner accès aux ressources sensibles qu'aux terminaux autorisés sans exposition des identités réseaux réelles des ressources sensibles.

La sécurité est renforcée avec un cloisonnement fort entre les ressources sensibles et les terminaux autorisés.

Le système de contrôle d'accès 17 ne permet pas l'existence de plusieurs vecteurs possédant 1 ou plusieurs paramètres déjà présents dans 1 vecteur utilisé, (un vecteur étant composé de l'identité réelle d'un terminal client, éventuellement associé à un utilisateur (par exemple @ip, @mac, IMSI, IMEI,...) et d'une identité virtuelle temporaire de destination (@ip)).

La solution permet :
- un accès aux ressources en restreignant l'accès à ceux qui ont seulement le besoin d'en connaitre ;
- une offuscation des informations réelles d'identification réseaux des serveurs / services sensibles destinations afin d'éviter toute attaque cyber ;
- un établissement de chemin spécifique avec contrôle d'accès à la ressource afin de garantir une priorité et un accès protégé au travers de multiples réseaux.

## Revendications

1. Procédé d'accès sécurisé, via un réseau de télécommunication (6) et depuis des terminaux (10), à des ressources (21) identifiées par des identifiants respectifs de ressource,
ledit procédé étant mis en oeuvre par un système électronique (17) de contrôle et comprenant les étapes suivantes :
- création, par le système de contrôle (17), d'une identité réseau virtuelle d'au moins une ressource à laquelle un terminal détient un droit d'accès via le réseau (6), telle que les identités réseau virtuelle d'une même ressource qui sont créés par le système de contrôle pour des terminaux distincts, sont distinctes, ladite identité réseau virtuelle de ladite ressource étant ainsi propre audit terminal ;
- enregistrement par le système de contrôle (17), de la correspondance entre l'identité réseau virtuelle de la ressource, l'identifiant de ressource, l'identité réseau réelle de la ressource et l'identité réseau du terminal ;
- en réponse à une requête, provenant du terminal, d'accès à la ressource, ladite requête indiquant l'identifiant de ladite ressource et requérant une identité réseau de ladite ressource en vue d'accéder via le réseau à ladite ressource, fourniture par le système de contrôle audit terminal de ladite identité réseau virtuelle de ladite ressource correspondant audit terminal et audit identifiant de ressource dans la correspondance enregistrée ;
- dans les flux de données échangés entre ledit terminal et ladite ressource :
remplacement, dans un flux provenant de ladite ressource et à délivrer audit terminal, de l'identité réseau réelle de la ressource par l'identité réseau virtuelle de la ressource correspondant, dans la correspondance enregistrée, à ladite identité réseau réelle de la ressource et à l'identité réseau dudit terminal ; et/ou
remplacement, dans un flux en provenance dudit terminal et indiquant l'identité réseau virtuelle de la ressource en destination du flux, l'identité réseau virtuelle par l'identité réseau réelle de la ressource correspondant, dans la correspondance enregistrée, à ladite l'identité réseau virtuelle de la ressource et à l'identité réseau dudit terminal,
le procédé **caractérisé en ce qu'**il comprend une vérification qu'une identité réseau virtuelle d'une ressource n'est pas utilisée par plus d'un terminal ; s'il est détecté qu'une identité réseau virtuelle d'une ressource est utilisée par plus d'un terminal, déclencher un traitement de gestion d'accès suspect.

2. Procédé d'accès sécurisé selon la revendication 1, comprenant au moins une desdites étapes suivantes mises en oeuvre par le système de contrôle (17) :
- la correspondance entre ladite identité réseau virtuelle de la ressource (21) et l'identité réseau du terminal (10) est invalidée dès la fin de session d'attachement au réseau dudit terminal ;
- des identités réseau virtuelle créées pour une même ressource et propres à audit terminal lors de sessions d'attachement au réseau successives sont distinctes.

3. Procédé d'accès sécurisé selon la revendication 1 ou 2, comprenant en outre au moins l'une des étapes de contrôle suivantes mises en oeuvre par le système de contrôle (17) :
- vérification que l'identité réseau virtuelle d'une ressource (21) utilisée par un terminal (10) est bien celle enregistrée comme correspondant à l'identité réseau dudit terminal ; s'il est détecté qu'elles ne correspondent pas, déclencher un traitement de gestion d'accès suspect ;
- ladite identité réseau virtuelle de ladite ressource étant propre audit terminal et propre à chaque utilisateur dudit terminal et la correspondance enregistrée par le système de contrôle, faisant correspondre un identifiant dudit utilisateur à l'identité réseau virtuelle de la ressource, à l'identifiant de ressource, à l'identité réseau réelle de la ressource et à l'identité réseau du terminal, vérification que l'identité réseau virtuelle d'une ressource utilisée par un terminal est bien celle enregistrée comme correspondant à l'identité réseau dudit terminal et l'identifiant dudit utilisateur courant du terminal ; s'il est détecté qu'elles ne correspondent pas, déclencher un traitement de gestion d'accès suspect.

4. Procédé d'accès sécurisé selon l'une des revendications précédentes, comprenant les étapes suivantes :
- détection, par ledit système de contrôle (17), de l'ouverture d'une session de communication sur ledit réseau (6) par un terminal (10) ;
- étant donné un ensemble de ressources comprenant plusieurs ressources, dont ladite ressource, auxquelles ledit terminal a autorisation d'accès, suite à ladite détection, lesdites étapes de création d'une identité réseau virtuelle et d'enregistrement sont réalisées pour chacune desdites ressources de l'ensemble.

5. Procédé d'accès sécurisé selon l'une des revendications précédentes, selon lequel les ressources ont préalablement été réparties en un premier ensemble de ressources sensibles (21) dont fait partie ladite ressource et un deuxième ensemble d'applications non sensibles (20) dont fait partie une autre ressource et comprenant une étape selon laquelle, en réponse à une requête, provenant du terminal (10), d'accès à ladite autre ressource, ladite requête indiquant l'identifiant de ladite autre ressource et requérant une identité réseau de ladite autre ressource en vue d'accéder via le réseau (6) à ladite ressource, fourniture par le système de contrôle (17) audit terminal de l'identité réseau réelle de ladite ressource.

6. Système (17) de contrôle d'accès sécurisé depuis des terminaux (10), via un réseau de télécommunication, à des ressources (21) identifiées par des identifiants respectifs de ressource,
ledit système étant adapté pour créer une identité réseau virtuelle d'au moins une ressource (21) à laquelle un terminal (10) détient un droit d'accès via le réseau, telle que les identités réseau virtuelle d'une même ressource qui sont créés par le système de contrôle pour des terminaux distincts, sont distinctes, ladite identité réseau virtuelle de ladite ressource étant ainsi propre audit terminal ;
le système de contrôle (17) est adapté pour enregistrer, dans au moins une mémoire, la correspondance entre l'identité réseau virtuelle de la ressource, l'identifiant de ressource, l'identité réseau réelle de la ressource et l'identité réseau du terminal ;
le système de contrôle (17) est adapté pour, en réponse à une requête, provenant du terminal, d'accès à la ressource et indiquant l'identifiant de ladite ressource et requérant une identité réseau de ladite ressource en vue d'accéder via le réseau à ladite ressource, fournir audit terminal ladite identité réseau virtuelle de ladite ressource correspondant audit terminal et audit identifiant de ressource dans la correspondance enregistrée ;
le système de contrôle (17) est adapté pour, dans les flux de données échangés entre ledit terminal (10) et ladite ressource (21) :
remplacer, dans un flux provenant de ladite ressource et à délivrer audit terminal, l'identité réseau réelle de la ressource par l'identité réseau virtuelle de la ressource correspondant, dans la correspondance enregistrée, à ladite identité réseau réelle de la ressource et à l'identité réseau dudit terminal ; et/ou
remplacer, dans un flux en provenance dudit terminal et indiquant l'identité réseau virtuelle de la ressource en destination du flux, l'identité réseau virtuelle par l'identité réseau réelle de la ressource correspondant, dans la correspondance enregistrée, à ladite l'identité réseau virtuelle de la
ressource et à l'identité réseau dudit terminal, le système (17) de contrôle d'accès étant **caractérisé en ce qu'**il est adapté pour vérifier qu'une identité réseau virtuelle d'une ressource n'est pas utilisée par plus d'un terminal ; le système (17) de contrôle d'accès étant en outre adapté pour, s'il est détecté qu'une identité réseau virtuelle d'une ressource est utilisée par plus d'un terminal, déclencher un traitement de gestion d'accès suspect.

7. Système (17) de contrôle d'accès sécurisé selon la revendication 6, adapté pour invalider la correspondance entre ladite identité réseau virtuelle de la ressource (21) et l'identité réseau du terminal (10) dès la fin de session d'attachement au réseau dudit terminal et/ou pour créer des identités réseau virtuelle distinctes pour une même ressource et propres à audit terminal lors de sessions d'attachement au réseau successives.

8. Système (17) de contrôle d'accès sécurisé selon la revendication 6 ou 7, adapté pour effectuer au moins une des opérations suivantes :
- vérifier que l'identité réseau virtuelle d'une ressource (21) utilisée par un terminal (10) est bien celle enregistrée comme correspondant à l'identité réseau dudit terminal ; et s'il est détecté qu'elles ne correspondent pas, déclencher un traitement de gestion d'accès suspect ;
- ladite identité réseau virtuelle de ladite ressource étant propre audit terminal et propre à chaque utilisateur dudit terminal et la correspondance enregistrée par le système de contrôle, faisant correspondre un identifiant dudit utilisateur à l'identité réseau virtuelle de la ressource, à l'identifiant de ressource, à l'identité réseau réelle de la ressource et à l'identité réseau du terminal, vérifier que l'identité réseau virtuelle d'une ressource utilisée par un terminal est bien celle enregistrée comme correspondant à l'identité réseau dudit terminal et l'identifiant dudit utilisateur courant du terminal ; s'il est détecté qu'elles ne correspondent pas, déclencher un traitement de gestion d'accès suspect.

9. Système (17) de contrôle d'accès sécurisé selon l'une des revendications 6 à 8, adapté pour détecter l'ouverture d'une session de communication sur ledit réseau (6) par un terminal (10) ; et
pour, étant donné un ensemble de ressources comprenant plusieurs ressources, dont ladite ressource (21), auxquelles ledit terminal a autorisation d'accès, suite à ladite détection, créer ladite identité réseau virtuelle et enregistrer ladite correspondance pour chacune desdites ressources de l'ensemble.

10. Système (17) de contrôle d'accès sécurisé selon l'une des revendications 6 à 9, adapté pour, les ressources ayant préalablement été réparties en un premier ensemble de ressources sensibles (21) dont fait partie ladite ressource et un deuxième ensemble d'applications non sensibles (20) dont fait partie une autre ressource, en réponse à une requête, provenant du terminal (10), d'accès à ladite autre ressource, ladite requête indiquant l'identifiant de ladite autre ressource et requérant une identité réseau de ladite autre ressource en vue d'accéder via le réseau (6) à ladite ressource, fournir audit terminal l'identité réseau réelle de ladite ressource.

## Patentansprüche

1. Verfahren für den gesicherten Zugriff über ein Telekommunikationsnetz (6) und von Endgeräten (10) aus auf Ressourcen (21), die durch jeweilige Ressourcenkennungen identifiziert werden,
wobei das Verfahren von einem elektronischen Kontrollsystem (17) implementiert wird und Folgendes umfasst:
- Erstellen, durch das Kontrollsystem (17), einer virtuellen Netzwerkidentität von mindestens einer Ressource, auf die ein Endgerät ein Zugriffsrecht über das Netzwerk (6) hat, so dass die Netzwerkidentitäten von mindestens einer Ressource, die vom Kontrollsystem für die verschiedenen Endgeräte erstellt werden, unterschiedlich sind. Die virtuelle Netzwerkidentität der Ressource ist somit für das Endgerät spezifisch;
- Registrierung der Übereinstimmung zwischen der virtuellen Netzwerkidentität der Ressource, der Ressourcenkennung, der tatsächlichen Netzwerkidentität der Ressource und der Netzwerkidentität des Endgeräts durch das Kontrollsystem (17);
- als Antwort auf eine Anfrage des Endgeräts nach Zugriff auf die Ressource, wobei die Anfrage die Kennung der Ressource angibt und eine Netzwerkidentität der Ressource für den Zugriff über das Netzwerk anfordert; und das Kontrollsystem liefert dem Endgerät die virtuelle Netzwerkidentität der Ressource, die dem Endgerät und der Ressourcenkennung in der gespeicherten Korrespondenz entspricht;
- in den zwischen dem Endgerät und der Ressource ausgetauschten Datenströmen:
Ersetzen der tatsächlichen Netzwerkidentität der Ressource in einem von der Ressource stammenden und an das Endgerät zu liefernden Datenstrom durch die virtuelle Netzwerkidentität der Ressource, die in der gespeicherten Korrespondenz der tatsächlichen Netzwerkidentität der Ressource und der Netzwerkidentität des Endgeräts entspricht; und/oder
Ersetzen der virtuellen Netzwerkidentität in einem Strom, der von dem Endgerät kommt und die virtuelle Netzwerkidentität der Ressource als Ziel des Stroms angibt, durch die tatsächliche Netzwerkidentität der entsprechenden Ressource in der gespeicherten Korrespondenz, zur virtuellen Netzwerkidentität der Ressource und der Netzwerkidentität des Endgeräts,
das Verfahren **dadurch gekennzeichnet, dass** es eine Überprüfung umfasst, dass eine virtuelle Netzwerkidentität einer Ressource nicht von mehr als einem Endgerät verwendet wird; wenn festgestellt wird, dass eine virtuelle Netzwerkidentität einer Ressource von mehr als einem Endgerät verwendet wird, Auslösen einer Bearbeitung zur Verwaltung verdächtigen Zugriffs.

2. Gesichertes Zugriffsverfahren nach Anspruch 1, umfassend mindestens einen der folgenden Schritte, die von dem Kontrollsystem (17) implementiert werden:
- die Übereinstimmung zwischen der virtuellen Netzwerkidentität der Ressource (21) und der Netzwerkidentität des Endgeräts (10) wird am Ende der Netzwerkanbindungssitzung des Endgeräts ungültig;
- virtuelle Netzwerkidentitäten, die für ein und dieselbe Ressource erstellt wurden und dem genannten Endgerät bei aufeinanderfolgenden Netzwerkanmeldesitzungen eigen sind, sind unterscheidbar.

3. Gesichertes Zugriffsverfahren nach Anspruch 1 oder 2, das außerdem mindestens einen der folgenden, vom Kontrollsystem (17) durchgeführten Kontrollschritte umfasst:
- Überprüfung, ob die virtuelle Netzwerkidentität einer Ressource (21), die von einem Endgerät (10) verwendet wird, diejenige ist, die als der Netzwerkidentität des Endgeräts entsprechend registriert ist; wenn festgestellt wird, dass sie nicht übereinstimmen, Auslösen einer Bearbeitung zur Verwaltung verdächtigen Zugriffs;
- wobei die virtuelle Netzwerkidentität der Ressource dem Endgerät und jedem Benutzer des Endgeräts eigen ist und die von dem Kontrollsystem aufgezeichnete Übereinstimmung eine Kennung des Benutzers mit der virtuellen Netzwerkidentität der Ressource, der Kennung der Ressource, der tatsächlichen Netzwerkidentität der Ressource und der Netzwerkidentität des Benutzers übereinstimmen lässt. Überprüfung, ob die virtuelle Netzwerkidentität einer Ressource, die von einem Endgerät verwendet wird, diejenige ist, die als der Netzwerkidentität des Endgeräts entsprechend registriert ist und der Kennung des aktuellen Benutzers des Endgeräts entspricht; wenn festgestellt wird, dass sie nicht übereinstimmen, Auslösen einer Bearbeitung zur Verwaltung verdächtigen Zugriffs.

4. Gesichertes Zugriffsverfahren nach einem der vorstehenden Ansprüche, ferner umfassend die folgenden Schritte:
- Erkennen durch das Kontrollsystem (17), dass ein Endgerät (10) eine Kommunikationssitzung über das Netzwerk (6) eröffnet wurde;
- da ein Satz von Ressourcen gegeben ist, der mehrere Ressourcen, darunter die Ressource, umfasst, zu denen das Endgerät eine Zugangsberechtigung hat, werden infolge der Erkennung die Schritte des Erzeugens einer virtuellen Netzwerkidentität und des Registrierens für jede der Ressourcen des Satzes durchgeführt.

5. Verfahren für den gesicherten Zugriff nach einem der vorhergehenden Ansprüche, bei dem die Ressourcen zuvor in eine erste Gruppe sensibler Ressourcen (21), zu denen die Ressource gehört, und eine zweite Gruppe nicht sensibler Anwendungen (20), zu denen eine andere Ressource gehört, aufgeteilt werden, und das einen Schritt umfasst, bei dem als Antwort auf eine vom Endgerät (10) ausgehende Anfrage nach Zugriff auf die andere Ressource, die Anfrage die Kennung der anderen Ressource angibt und eine Netzwerkidentität der anderen Ressource anfordert, um über das Netzwerk (6) auf die Ressource zuzugreifen, wobei das Kontrollsystem (17) dem Endgerät die tatsächliche Netzwerkidentität der Ressource liefert.

6. System (17) zur Kontrolle des gesicherten Zugriffs von Endgeräten (10) über ein Telekommunikationsnetz auf Ressourcen (21), die von der jeweiligen Ressourcenkennung identifiziert werden. Das System ist so ausgelegt, dass es eine virtuelle Netzwerkidentität mindestens einer Ressource (21) erzeugt, auf die ein Endgerät (10) über das Netz ein Zugriffsrecht besitzt, so dass die virtuellen Netzidentitäten ein und derselben Ressource, die von dem Kontrollsystem für unterschiedliche Endgeräte erstellt werden, unterschiedlich sind, wobei die virtuelle Netzidentität der Ressource somit für das Endgerät spezifisch ist;
das Kontrollsystem (17) ist dazu geeignet, in mindestens einem Speicher die Übereinstimmung zwischen der virtuellen Netzwerkidentität der Ressource, der Ressourcenkennung, der tatsächlichen Netzwerkidentität der Ressource und der Netzwerkidentität des Endgeräts aufzuzeichnen;
das Kontrollsystem (17) ist so beschaffen, dass es in Reaktion auf eine Anfrage vom Endgerät nach Zugriff auf die Ressource, die die Ressourcenkennung angibt und eine Netzwerkidentität für die Ressource anfordert, um über das Netzwerk auf die Ressource zuzugreifen, dem Endgerät die virtuelle Netzwerkidentität der dem Endgerät und der Ressourcenerkennung in der gespeicherten Korrepondenz entsprechenden Ressource liefert;
das Kontrollsystem (17) ist geeignet, um in den Datenströmen, die zwischen dem Endgerät (10) und der Ressource (21) ausgetauscht werden Folgendes zu tun:
in einem von der Ressource ausgehenden und an das Endgerät zu liefernden Strom die tatsächliche Netzwerkidentität der Ressource durch die virtuelle Netzwerkidentität der Ressource ersetzen, die in der gespeicherten Korrespondenz der tatsächlichen Netzwerkidentität der Ressource und der Netzwerkidentität des Endgeräts entspricht; und/oder
Ersetzen der virtuellen Netzwerkidentität in einem Datenstrom, der von dem Endgerät kommt und die virtuelle Netzwerkidentität der Ressource als Ziel des Datenstroms angibt, durch die tatsächliche Netzwerkidentität der Ressource, die in der gespeicherten Korrespondenz der virtuellen Netzwerkidentität der Ressource und der Netzwerkidentität des Endgeräts entspricht,
wobei das Zugriffskontrollsystem (17) **dadurch gekennzeichnet ist, dass** es geeignet ist, um zu überprüfen, dass eine virtuelle Netzwerkidentität einer Ressource nicht von mehr als einem Endgerät verwendet wird; wobei das Zugriffskontrollsystem (17) ferner dazu ausgelegt ist, wenn festgestellt wird, dass eine virtuelle Netzwerkidentität einer Ressource von mehr als einem Endgerät verwendet wird, eine Bearbeitung zur Verwaltung verdächtigen Zugriffs auslösen.

7. System (17) zur Kontrolle des gesicherten Zugriffs nach Anspruch 6, das so beschaffen ist, dass es die Übereinstimmung zwischen der virtuellen Netzwerkidentität der Ressource (21) und der Netzwerkidentität des Endgeräts (10) nach dem Ende der Netzwerkanbindungssitzung des Endgeräts und/oder zum Erzeugen von unterschiedlichen virtuellen Netzwerkidentitäten für eine gleiche Ressource, die dem Endgerät bei aufeinanderfolgenden Netzwerkanbindungssitzungen eigen sind ungültig macht.

8. System (17) zur Kontrolle des gesicherten Zugriffs nach Anspruch 6 oder 7, das dazu geeignet ist, mindestens einen der folgenden Vorgänge auszuführen:
- Überprüfen, ob die virtuelle Netzwerkidentität einer Ressource (21), die von einem Endgerät (10) verwendet wird, diejenige ist, die als der Netzwerkidentität des Endgeräts entsprechend registriert ist; und wenn festgestellt wird, dass sie nicht übereinstimmen, eine Bearbeitung zur Verwaltung verdächtigen Zugriffs auslösen;
- wobei die virtuelle Netzwerkidentität der Ressource dem Endgerät und jedem Benutzer des Endgeräts eigen ist und die von dem Kontrollsystem aufgezeichnete Übereinstimmung eine Identität des Benutzers mit der virtuellen Netzwerkidentität der Ressource, der Ressourcenkennung, der tatsächlichen Netzwerkidentität der Ressource und der Netzwerkidentität des Endgeräts übereinstimmt. Überprüfen, ob die virtuelle Netzwerkidentität einer Ressource, die von einem Endgerät verwendet wird, diejenige ist, die als Übereinstimmung mit der Netzwerkidentität des Endgeräts und der der Kennung des aktuellen Benutzers des Endgeräts registriert ist; wenn festgestellt wird, dass sie nicht übereinstimmen, Auslösen einer Bearbeitung zur Verwaltung verdächtigen Zugriffs.

9. System (17) zur Kontrolle des gesicherten Zugriffs nach einem der Ansprüche 6 bis 8, das dazu ausgelegt ist, die Eröffnung einer Kommunikationssitzung in dem Netzwerk (6) durch ein Endgerät (10) zu erkennen; und
um, wenn ein Satz von Ressourcen gegeben ist, der mehrere Ressourcen, einschließlich der Ressource (21), umfasst, zu denen das Endgerät nach der Erkennung eine Zugriffsberechtigung hat, die virtuelle Netzwerkidentität zu erzeugen und die Übereinstimmung für jede der Ressourcen des Satzes zu speichern.

10. System (17) zur Kontrolle des gesicherten Zugriffs nach einem der Ansprüche 6 bis 9, angepasst, um, nachdem die Ressourcen zuvor in eine erste Gruppe sensibler Ressourcen (21), zu denen die Ressource gehört, und eine zweite Gruppe nicht sensibler Anwendungen (20), zu denen eine andere Ressource gehört, aufgeteilt wurden, auf eine Anfrage vom Endgerät (10) auf Zugriff auf die andere Ressource zu antworten. Diese Anfrage gibt den Identifikator der anderen Ressource an und fordert eine Netzwerkidentität der anderen Ressource, um über das Netzwerk (6) auf die Ressource zuzugreifen, dem Endgerät die tatsächliche Netzwerkidentität der Ressource bereitzustellen.

## Claims

1. A method of secure access, via a telecommunications network (6) and from terminals (10), to resources (21) identified by respective resource identifiers,
said method being implemented by an electronic control system (17) and comprising the following steps:
- creation, by the control system (17), of a virtual network identity of at least one resource to which a terminal has a right of access via the network (6), such that the virtual network identities of the same resource which are created by the control system for distinct terminals are distinct, the said virtual network identity of the said resource thus being specific to the said terminal;
- recording by the control system (17) of the correspondence between the virtual network identity of the resource, the resource identifier, the real network identity of the resource and the network identity of the terminal;
- in response to a request, from the terminal, for access to the resource, said request indicating the identifier of said resource and requesting a network identity of said resource with a view to accessing said resource via the network, provision by the control system to said terminal of said virtual network identity of said resource corresponding to said terminal and to said resource identifier in the recorded correspondence;
- in the data flows exchanged between said terminal and said resource: replacing, in a flow originating from said resource and to be delivered to said terminal, the real network identity of the resource by the virtual network identity of the resource corresponding, in the recorded correspondence, to said real network identity of the resource and to the network identity of said terminal; and/or replacing, in a stream originating from said terminal and indicating the virtual network identity of the resource at the destination of the stream, the virtual network identity by the real network identity of the resource corresponding, in the recorded correspondence, to said virtual network identity of the resource and to the network identity of said terminal,
the method being **characterised in that** it comprises a check that a virtual network identity of a resource is not being used by more than one terminal; if it is detected that a virtual network identity of a resource is being used by more than one terminal, triggering suspicious access management processing.

2. A secure access method as claimed in claim 1, comprising at least one of the following steps implemented by the control system (17):
- the correspondence between said virtual network identity of the resource (21) and the network identity of the terminal (10) is invalidated at the end of the session of attachment to the network of said terminal;
- virtual network identities created for the same resource and specific to the said terminal during successive network attachment sessions are distinct.

3. Secure access method according to claim 1 or 2, further comprising at least one of the following control steps implemented by the control system (17):
- checking that the virtual network identity of a resource (21) used by a terminal (10) is indeed the one registered as corresponding to the network identity of said terminal; if it is detected that they do not correspond, triggering suspicious access management processing;
- said virtual network identity of said resource being specific to said terminal and specific to each user of said terminal and the correspondence recorded by the control system, matching an identifier of said user to the virtual network identity of the resource, to the resource identifier, to the real network identity of the resource and to the network identity of the terminal, verifying that the virtual network identity of a resource used by a terminal is indeed that recorded as corresponding to the network identity of said terminal and the identifier of said current user of the terminal ; if it is detected that they do not correspond, triggering suspicious access management processing.

4. Secure access method according to one of the preceding claims, comprising the following steps:
- detection, by said control system (17), of the opening of a communication session on said network (6) by a terminal (10);
- given a set of resources comprising several resources, including the said resource, to which the said terminal has access authorisation, following the said detection, the said steps of creating a virtual network identity and registering are carried out for each of the said resources of the set.

5. Secure access method according to one of the preceding claims, according to which the resources have previously been divided into a first set of sensitive resources (21) of which said resource forms part and a second set of non-sensitive applications (20) of which another resource forms part and comprising a step according to which, in response to a request, from the terminal (10), for access to said other resource, said request indicating the identifier of said other resource and requiring a network identity of said other resource with a view to accessing said resource via the network (6), the control system (17) supplies said terminal with the actual network identity of said resource.

6. System (17) for controlling secure access from terminals (10), via a telecommunications network, to resources (21) identified by respective resource identifiers, said system being adapted to create a virtual network identity of at least one resource (21) to to which a terminal (10) has a right of access via the network, such that the virtual network identities of the same resource that are created by the control system for distinct terminals are distinct, said virtual network identity of said resource thus being specific to said terminal; the control system (17) is adapted to record, in at least one memory, the correspondence between the virtual network identity of the resource, the resource identifier, the real network identity of the resource and the network identity of the terminal;
the control system (17) is adapted, in response to a request from the terminal for access to the resource and indicating the identifier of said resource and requesting a network identity of said resource with a view to accessing said resource via the network, to provide said terminal with said virtual network identity of said resource corresponding to said terminal and to said resource identifier in the recorded correspondence;
the control system (17) is adapted to, in the data streams exchanged between said terminal (10) and said resource (21):
replacing, in a stream originating from said resource and to be delivered to said terminal, the real network identity of the resource by the virtual network identity of the resource corresponding, in the recorded correspondence, to said real network identity of the resource and to the network identity of said terminal; and/or
replacing, in a stream originating from said terminal and indicating the virtual network identity of the resource at the destination of the stream, the virtual network identity by the real network identity of the resource corresponding, in the recorded correspondence, to said virtual network identity of the resource and to the network identity of said terminal,
the access control system (17) being **characterised in that** it is adapted to check that a virtual network identity of a resource is not being used by more than one terminal; the access control system (17) being further adapted to, if it is detected that a virtual network identity of a resource is being used by more than one terminal, trigger suspicious access management processing.

7. Secure access control system (17) according to claim 6, adapted to invalidate the correspondence between said virtual network identity of the resource (21) and the network identity of the terminal (10) as soon as the session of attachment to the network of said terminal has ended and/or to create distinct virtual network identities for the same resource and specific to said terminal during successive network attachment sessions.

8. A secure access control system (17) as claimed in claim 6 or 7, adapted to perform at least one of the following operations:
- checking that the virtual network identity of a resource (21) used by a terminal (10) is indeed the one registered as corresponding to the network identity of said terminal; and if it is detected that they do not correspond, triggering suspicious access management processing;
- said virtual network identity of said resource being specific to said terminal and specific to each user of said terminal and the correspondence recorded by the control system, matching an identifier of said user to the virtual network identity of the resource, to the resource identifier, to the real network identity of the resource and to the network identity of the terminal, verifying that the virtual network identity of a resource used by a terminal is indeed that recorded as corresponding to the network identity of said terminal and the identifier of said current user of the terminal ; if it is detected that they do not correspond, trigger suspicious access management processing.

9. Secure access control system (17) according to one of claims 6 to 8, adapted to detect the opening of a communication session on said network (6) by a terminal (10); and
for, given a set of resources comprising several resources, including the said resource (21), to which the said terminal has access authorisation, following the said detection, creating the said virtual network identity and recording the said correspondence for each of the said resources of the set.

10. Secure access control system (17) according to one of claims 6 to 9, adapted for, the resources having previously been divided into a first set of sensitive resources (21) of which said resource forms part and a second set of non-sensitive applications (20) of which another resource forms part, in response to a request from the terminal (10) for access to said other resource, said request indicating the identifier of said other resource and requesting a network identity of said other resource with a view to accessing said resource via the network (6), providing said terminal with the actual network identity of said resource.
